# EUROPEAN PATENT APPLICATION

(11) **EP 4 235 417 A1**
(43) Date of publication of application: **30.08.2023**
(21) Application number: 22188367.1
(22) Date of filing: 02.08.2022
(51) Int. Cl.: G06F 9/48, G06F 9/54, G06F 11/16, G05B 9/03, G06F 9/52

(54) **SYNCH MANAGER FOR HIGH AVAILABILITY CONTROLLER**

(30) Priority: 24.02.2022 US 202217679744
(71) Applicant: Schneider Electric Systems USA, Inc., Foxborough, Massachusetts 02035 (US)
(72) Inventor: MUJUMDAR, Subodh, 500084 Hyderabad, Telangana (IN); DASARI, Vishnuvardhan Rao, 500089 Hyderabad, Telangana (IN); SAWARKAR, Vishal, 500019 Hyderabad, Telangana (IN); BOTSA, Krishnamohan, 500090 Hyderabad, Telangana (IN); ANSARI, Shahid, 500008 Hyderabad, Telangana (IN)
(74) Representative: Friese Goeden Patentanwälte PartGmbB

(57) **Abstract**

A synchronization manager interface determines a first state of execution of an application task executing on a first controller at defined synchronization points and further determines a second state of execution of the application task executing on a second controller at the defined synchronization points. The synchronization manager interface, when executed, configures the first controller to transmit the first state from the first controller to the second controller via a communications channel established between the controllers for verifying a successful synchronization of the application task on the controllers based on a comparison of the first state with the second state.

## Description

### BACKGROUND

Creating a high availability scheme for a controller typically requires dedicated hardware interfaces. In addition, conventional high availability schemes are platform- and application-specific, which increases the overall product cost. For a low-cost controller, which is usually operated in a simplex mode, defining such a scheme does not meet business objectives. There is a need for an electrical controller capable of bringing data from an electrical or power system to the process control network that can be a native citizen of a Distributed Control System (DCS). The electrical controller must maintain the high availability requirements of the DCS to be used as a native citizen. Such a controller should be capable of obtaining data from the various low voltage (LV) and medium voltage (MV) devices supporting the open standard communication protocols and serving this data to the DCS using its proprietary communication protocols. Conventional high availability schemes are limited to specific platforms and/or applications and are unable to provide high availability across different domains.

### SUMMARY

Aspects of the present disclosure provide a high availability controller through the use of an application programming interface for state and data synchronization between the power and process domains. For instance, aspects of the present disclosure permit retrofitting an existing simplex electrical controller design to make it highly available using a dedicated communication channel for synchronization. In addition, the interface can be used by any controller that has spare communication interfaces for synchronization. In other words, hardware modifications in the existing controller are not required to achieve high availability of operations.

In an aspect, a method of synchronizing one or more application tasks executing on an active controller and on a standby controller includes identifying an application task executing on the active controller and the standby controller capable of synchronization and defining, for the application task, one or more synchronization points at which execution of the application task is to be synchronized. The method also includes synchronizing execution of the application task on the active controller and the standby controller at each of the synchronization points, determining a first state of execution of the application task executing on the active controller at the synchronization points, and transmitting the first state from the active controller to the standby controller via a communications channel established between the controllers. The method further includes verifying a successful synchronization of the application task on the active controller and the standby controller based on a comparison of the first state with a second state of execution of the application task executing on the standby controller at the synchronization points.

In another aspect, a system comprises a first controller and a second controller. The first controller executes an application task having one or more defined synchronization points at which execution of the application task is to be synchronized. The second controller executes the application task having the same one or more defined synchronization points as the application task executing on the first controller. The first controller further executes a synchronization manager interface for determining a first state of execution of the application task executing on the first controller at the synchronization points and the second controller further executes the synchronization manager interface for determining a second state of execution of the application task executing on the second controller at the synchronization points. The synchronization manager interface, when executed, configures the first controller to transmit the first state from the first controller to the second controller via a communications channel established between the controllers for verifying a successful synchronization of the application task on the first controller and the second controller based on a comparison of the first state with the second state.

Other objects and features of the present disclosure will be in part apparent and in part pointed out herein.

### BRIEF DESCRIPTION OF THE DRAWINGS

FIG. 1 is a block diagram illustrating a power and process system according to an embodiment.
FIG. 2 is a block diagram illustrating a synchronization process architecture according to an embodiment.
FIG. 3 illustrates an example format of a synchronization message for use in the synchronization of FIG. 2.
FIG. 4 is a block diagram illustrating a synchronization process architecture according to an embodiment.
FIGS. 5A and 5B illustrate two manners of deploying synchronization messages each according to an embodiment.
FIG. 6 is a block diagram illustrating a synchronization process architecture according to an embodiment.
FIG. 7 is a block diagram illustrating a synchronization process architecture according to an embodiment.

Corresponding reference numbers indicate corresponding parts throughout the drawings.

### DETAILED DESCRIPTION

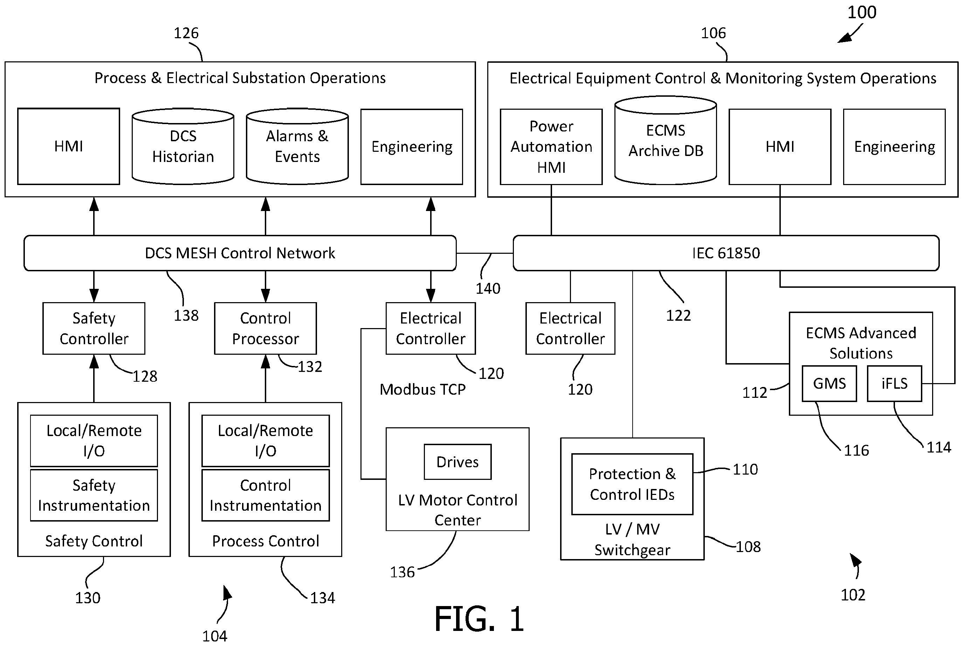

Referring to FIG. 1, an example process and power system 100 is shown. In the illustrated embodiment, the system 100 integrates a power system 102 and a process system 104. The power system 102 comprises electrical equipment control and monitoring system (ECMS) operations indicated at 106. The ECMS operations 106 include, for instance, at least one human-machine interface (HMI) and at least one database containing archived ECMS data for automating electrical substation control, maintaining stable generating conditions, and the like. The power system 102 of FIG. 1 also includes low voltage (LV) and/or medium voltage (MV) switchgear 108 (housing protection and control intelligent electronic devices (IEDs) 110) and ECMS solutions 112 (including, for example, intelligent Fast Load Shed (iFLS) protection 114 and a Generation Management System (GMS) 116). One or more electrical controllers 120 of power system 102 provide functionality for data acquisition, display, history collection, alarming, reporting, etc. The controller 120 is configured for obtaining data from the various LV and MV devices. As familiar to those skilled in the art, communications within power system 102 are in accordance with an IEC 61850 network, indicated at 122. IEC 61850 defines a standard for the design of electrical substation automation systems and applications, including a communication protocol. In this regard, each logical device, such as each IED 110, is a logical node on the IEC 61850 network 122 representing a functional capability of the logical device. Moreover, the electrical controller 120 of power system 102 is a node on IEC 61850 network 122.

The process system 104 of FIG. 1 comprises process and electrical substation operations indicated at 126. The operations 126 include, for instance, at least one HMI, at least one database containing alarms and events, at least one historian, and the like. The process system 104 also includes at least one safety controller 128 connected to one or more safety control devices 130 and at least one processor controller 132 connected to one or more process control devices 134. Further to the example of FIG. 1, one or more electrical controllers 120 of process system 102 provide functionality for data acquisition, display, history collection, alarming, reporting, etc. with respect to a low voltage motor control center (MCC) 136 or the like. As familiar to those skilled in the art, the components of process system 102 are coupled in accordance with a distributed control system (DCS) MESH network, indicated at 138. In this embodiment, electrical controller 120 of process system 104 is a node on MESH network 138 and maintains the high availability requirements of the DCS.

In accordance with aspects of the present disclosure, one or more application tasks executing on the electrical controller 120 of power system 102 and executing on the electrical controller 120 of process system 104 are synchronized via a dedicated communication channel 140. As described above, creating a high availability scheme for a controller typically requires dedicated hardware interfaces and is platform- and application-specific. The electrical controller 120, however, is capable of satisfying the high availability requirements of the DCS as well as capable of bringing the data from power system 102 to process system 104. In this regard, controller 120 can receive data from the various LV and MV devices supporting the open standard communication protocols and serve the data to the DCS using its proprietary communication protocols.

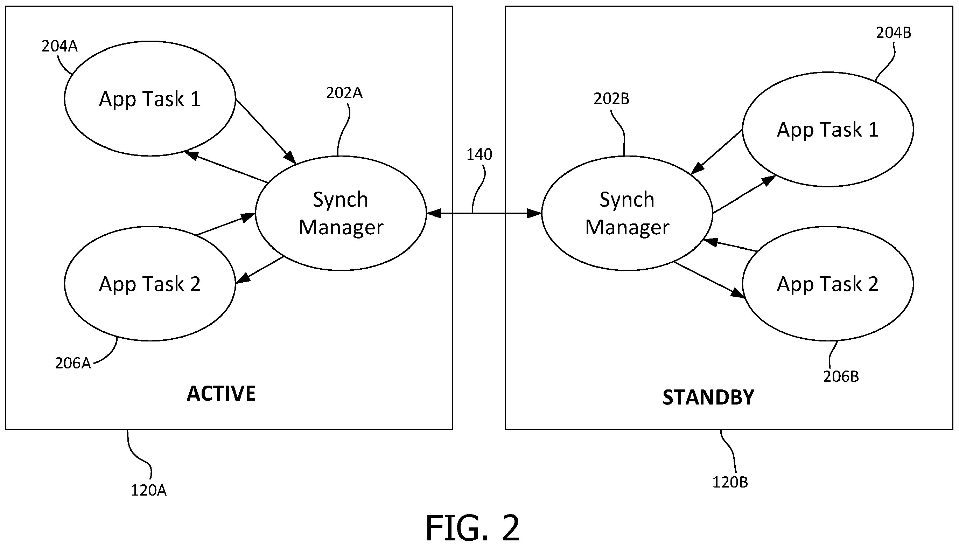

FIG. 2 is a block diagram illustrating an embodiment of a synchronization process. A high availability mechanism referred to as Synch Manager 202A, 202B is defined to synchronize the functioning of two controllers 120A, 120B configured as Active (or Hot) and Standby, respectively. As shown, the Synch Manager 202A executes on controller 120A of, for example, process system 104, and Synch Manager 202B executes on controller 120B of, for example, power system 102, or vice versa. Both controllers 120A, 120B are power (electrical) controllers, one is Active and the other Standby. The same controller can work on the two networks (power and process) resulting in exchange of data and commands between the two networks. This abstract mechanism provides one or more application programming interfaces (APIs) for synchronizing the functioning of one or more application tasks 204A, 206A executing on controller 120A and corresponding application tasks 204B, 206B executing on controller 120B. It is to be understood that a synchronization manager interface such as Synch Manager 202A, 202B synchronizes any number of one or more application tasks.

The Synch Manager 202A, 202B ensures that the application tasks 204A, 204B are executed in synch and the application tasks 206A, 206B are executed in synch, while the details of the synchronization are handled by the application tasks themselves. Synchronization is achieved by means of synchronization points (also referred to as Synch Points), which are the points of execution of application tasks 204A, 204B and 206A, 206B that ensure synchronous execution of the tasks. The synchronization points are defined for the same domain (power / process) controller application tasks. The two controllers which constitute a Hot /-Standby pair, run the same applications (same configuration and firmware) and hence the application tasks are the same across the two peer controllers.

The APIs provided by Synch Manager 202A, 202B ensure synchronization of application "State" and "Data." In an embodiment, Synch Manager 202A, 202B transmits a first state to the same domain (power / process) controller, running the same application (configuration and firmware). These APIs report "Success" or "Failure" or "Timeout" of the synch operation. The application tasks 204A, 204B and 206A, 206B determine actions to be taken post-synchronization. Due to the application agnostic nature of the synch APIs, any application task in controller 120 can use them and build its own synchronization mechanism based on the application-specific functions. For this reason, Synch Manager 202A, 202B can be used by any controller 120 that has spare communication interfaces for synchronization. Advantageously, no hardware modifications are required in the existing controller 120 to achieve high availability of operations.

Aspects of the present disclosure provide a high availability scheme defining an abstract synchronization scheme that is both platform and application agnostic. This scheme allows a simplex controller to be converted to Hot / Standby pair of controllers 120A, 120B without requiring any hardware modifications. It can work on the existing communication interfaces (e.g., lower bandwidth (as low as 2.5 MBPS)) and is agnostic with respect to communication technology. This is achieved by minimizing on the data throughput for the synchronization. The overall efficiency of the controller operation is also increased in the redundant pair configuration by defining loosely coupled controllers. In this manner, aspects of the present disclosure provide a controller capable of high availability of: control applications; controller online configuration and diagnostics; alarms; Sequence of Events (SOEs); data distribution commands communication; network channel (network communication); data acquisition and control (e.g., Modbus, IEC 61850, and hard-wired input/output); and the like.

Referring further to FIG. 2, the Synch Manager 202A, 202B provides an application agnostic synchronization mechanism for synchronization of application tasks 204A, 204B and 206A, 206B. This abstract mechanism defines the application interface for state and data synchronization whereas application-specific synchronization is defined by the application tasks themselves. The two nodes on their respective networks, Active and Standby, run concurrently for the data they can receive independently and share the data that is only available to the Active node, i.e., controller 120A. Low data throughput for synchronization shares only minimal data for application synchronization. In operation, Synch Manager 202A, 202B defines Synch Points, which are the execution statements to be synchronized in the application tasks 204A, 204B and 206A, 206B and exchanges synch messages. The Synch Manager 202A, 202B reports Synch Success, Synch Failure / Timeout to the respective application task 204A, 204B, 206A, 206B. In turn, application task 204A, 204B, 206A, 206B defines any synchronization action post-synch feedback. In an embodiment, each node periodically checks for the presence of its peer node, and determines the role of the node as either Active or Standby. If the peer node is lost, it needs to be recovered once it is back online. In this instance, the database is shared with the peer and resynchronization is established following the recovery.

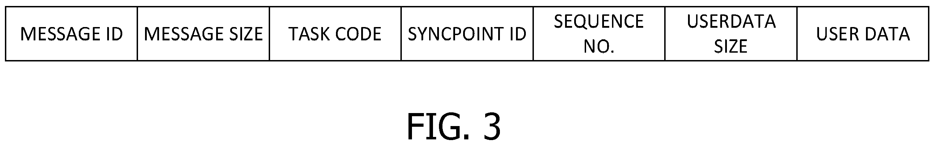

FIG. 3 illustrates an example message format communicated between controller 120A and controller 120B via communication channel 140 in accordance with aspects of the present disclosure. In an embodiment, communications on the communication channel 140 use a networking communication protocol, such as Arcnet, but can use Ethernet or another networking technology. As shown, the message consists of the Synch Points between the two nodes and preferably includes: Message ID; Message Length; Task Code; Sync Point ID; Sequence Number; User Data Size; and User Data Bytes.

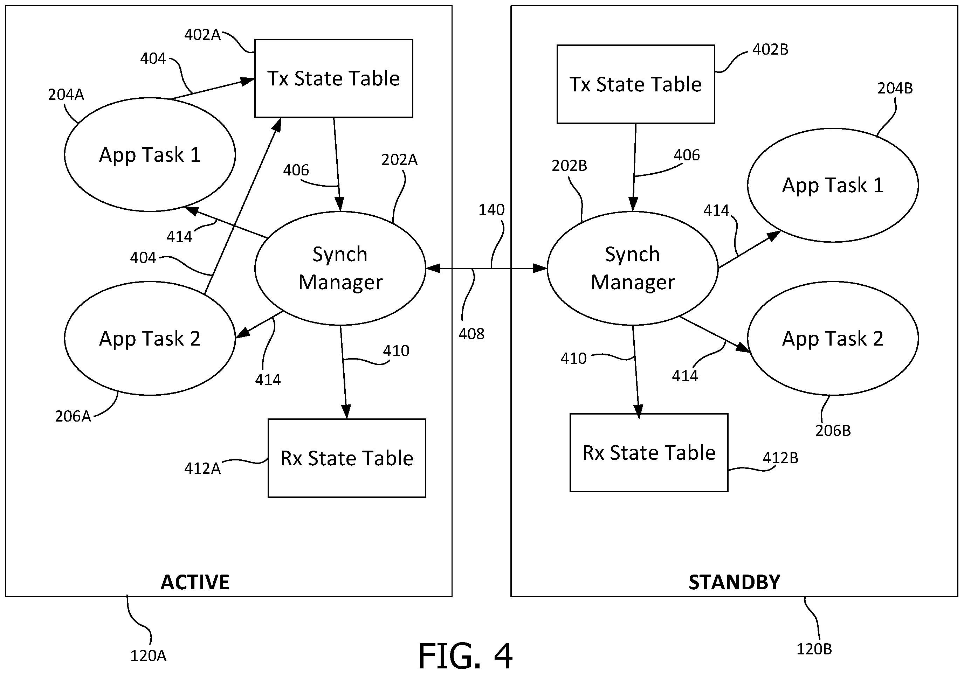

FIG. 4 is a block diagram illustrating an embodiment of a synchronization process architecture including further aspects of the present disclosure. In FIG. 4, application tasks 204A, 206A update a SynchState Message into a Transmit State Table 402A at 404. At 406, Synch Manager 202A periodically reads the Transmit State Table 402A. Similarly, Synch Manager 202B periodically reads a corresponding Transmit State Table 402B at 406. At 408, Synch Manager 202A sends the new messages to the peer Synch Manager 202B via communication channel 140, or vice versa. The Synch Manager 202B receives the messages from its peer at 410 and updates a Receive State Table 412B. Similarly, Synch Manager 202A receives the messages from its peer at 410 and updates a corresponding Receive State Table 412A. Proceeding to 414, Synch Manager 202A compares the respective entries in both the tables 412A, 412B and informs the application tasks 204A, 206A of the result of synchronization. In the event the Active and Standby roles are reversed, at 414, Synch Manager 202B compares the respective entries in both the tables 412A, 412B and informs the application tasks 204B, 206B of the result of synchronization.

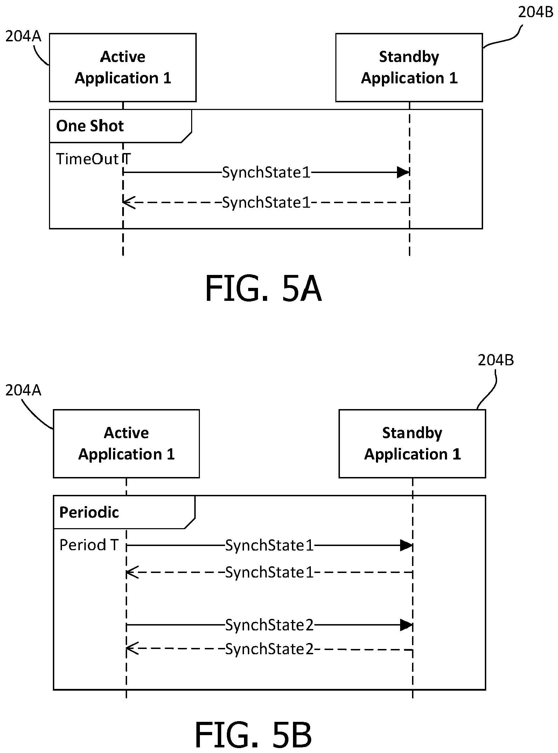

FIGS. 5A and 5B illustrate two types of Synch State messages defined by Synch Manager 202A, 202B according to an embodiment of the present disclosure. As shown in FIG. 5A, a one shot synch message is used for synchronous execution of application tasks 204A, 204B. In FIG. 5B, a periodic synch message is used to ensure synchronous state (application-specific data) of application tasks 204A, 204B. The Active node (e.g., controller 120A) sends periodic synch messages and expects the response from the Standby node (e.g., controller 120B). The result of synchronization is sent to the application tasks 204A, 204B to allow them to plan the next steps that will ensure the synchronous execution.

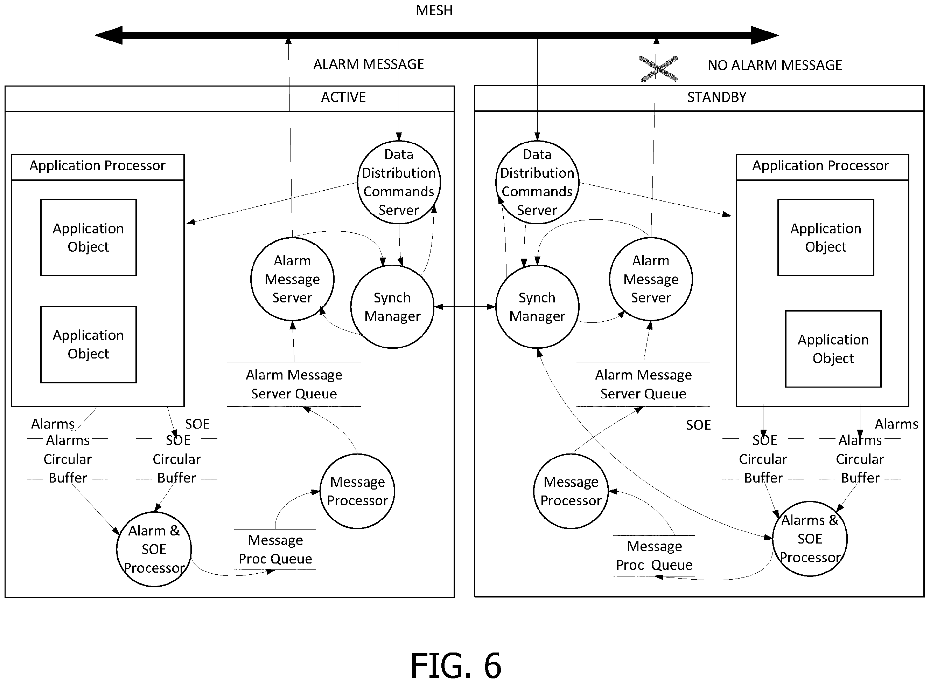

FIG. 6 is a block diagram illustrating an embodiment of a synchronization process architecture including further aspects of the present disclosure providing synchronization of alarms, SOE, and data distribution commands. In this embodiment, the Synch Manager synchronizes an alarm message server and data distribution commands server application tasks in controller 120. Examples of other application tasks include: system initialize, application processor, scanner, message processor, import, and Optonet Rx. The data distribution commands server sends the number of data distribution commands received every 500 millisecond interval, for example. The data distribution command counts are checked for synchronization. In case of failure of synchronization, a Hot recovery is initiated. Hot recovery consists of sending the batch of commands that failed to synchronize. The alarm message server in this example sends the alarms and SOE count transmitted every 500 millisecond interval. The Standby node adjusts its circular buffers based on the count received. In case of recovery / resynchronization of the Standby node, the data distribution commands database and the alarms / SOE database are transferred. Post-recovery, the synchronization is resumed.

Advantageously, Synch Manager 202A, 202B is application and platform agnostic. For this reason, it can retrofit to an existing simplex controller design to make it highly available (using a dedicated communication channel for synchronization) and provides a scalable framework to which application tasks can be added for synchronization without impacting the existing synchronization.

The Synch Manager 202A, 202B further provides an extensible framework that works with other mechanisms of synchronization in order to build a customized synchronization mechanism. For example, Synch Manager 202A, 202B works with Supervisory Control and Data Acquisition (SCADA) remote terminal unit (RTU) database synch mechanisms such as Hot Data Exchange Protocol (HDEP).

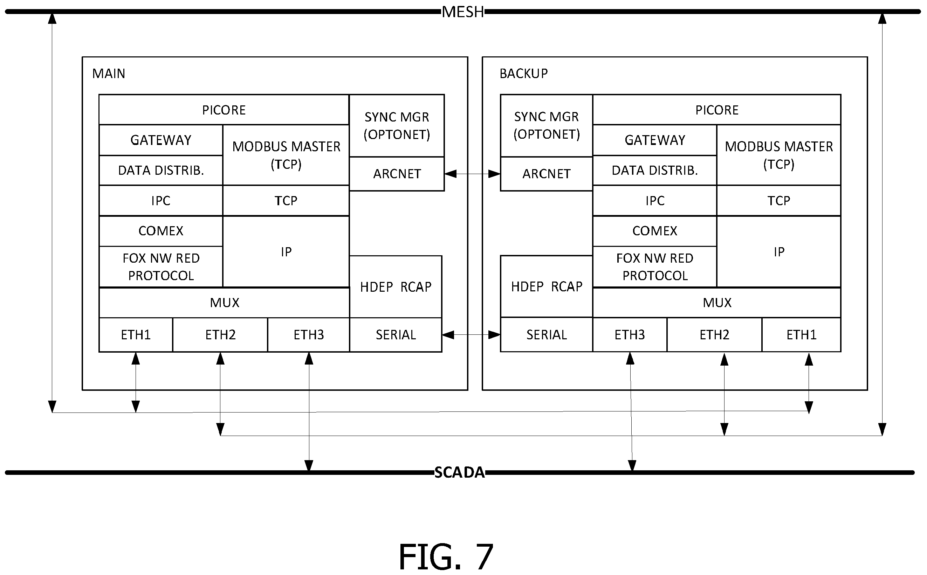

Referring to FIG. 7, an example Synch Manager high available architecture is shown for an Active, or main, electrical controller 120A and a Standby, or backup, electrical controller 120B.

Embodiments of the present disclosure may comprise a special purpose computer including a variety of computer hardware, as described in greater detail herein.

For purposes of illustration, programs and other executable program components may be shown as discrete blocks. It is recognized, however, that such programs and components reside at various times in different storage components of a computing device, and are executed by a data processor(s) of the device.

Although described in connection with an example computing system environment, embodiments of the aspects of the invention are operational with other special purpose computing system environments or configurations. The computing system environment is not intended to suggest any limitation as to the scope of use or functionality of any aspect of the invention. Moreover, the computing system environment should not be interpreted as having any dependency or requirement relating to any one or combination of components illustrated in the example operating environment. Examples of computing systems, environments, and/or configurations that may be suitable for use with aspects of the invention include, but are not limited to, personal computers, server computers, hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like.

Embodiments of the aspects of the present disclosure may be described in the general context of data and/or processor-executable instructions, such as program modules, stored one or more tangible, non-transitory storage media and executed by one or more processors or other devices. Generally, program modules include, but are not limited to, routines, programs, objects, components, and data structures that perform particular tasks or implement particular abstract data types. Aspects of the present disclosure may also be practiced in distributed computing environments where tasks are performed by remote processing devices that are linked through a communications network. In a distributed computing environment, program modules may be located in both local and remote storage media including memory storage devices.

In operation, processors, computers and/or servers may execute the processor-executable instructions (e.g., software, firmware, and/or hardware) such as those illustrated herein to implement aspects of the invention.

Embodiments may be implemented with processor-executable instructions. The processor-executable instructions may be organized into one or more processor-executable components or modules on a tangible processor readable storage medium. Also, embodiments may be implemented with any number and organization of such components or modules. For example, aspects of the present disclosure are not limited to the specific processor-executable instructions or the specific components or modules illustrated in the figures and described herein. Other embodiments may include different processor-executable instructions or components having more or less functionality than illustrated and described herein.

The order of execution or performance of the operations in accordance with aspects of the present disclosure illustrated and described herein is not essential, unless otherwise specified. That is, the operations may be performed in any order, unless otherwise specified, and embodiments may include additional or fewer operations than those disclosed herein. For example, it is contemplated that executing or performing a particular operation before, contemporaneously with, or after another operation is within the scope of the invention.

When introducing elements of the invention or embodiments thereof, the articles "a," "an," "the," and "said" are intended to mean that there are one or more of the elements. The terms "comprising," "including," and "having" are intended to be inclusive and mean that there may be additional elements other than the listed elements.

Not all of the depicted components illustrated or described may be required. In addition, some implementations and embodiments may include additional components. Variations in the arrangement and type of the components may be made without departing from the spirit or scope of the claims as set forth herein. Additional, different or fewer components may be provided and components may be combined. Alternatively, or in addition, a component may be implemented by several components.

The above description illustrates embodiments by way of example and not by way of limitation. This description enables one skilled in the art to make and use aspects of the invention, and describes several embodiments, adaptations, variations, alternatives and uses of the aspects of the invention, including what is presently believed to be the best mode of carrying out the aspects of the invention. Additionally, it is to be understood that the aspects of the invention are not limited in its application to the details of construction and the arrangement of components set forth in the following description or illustrated in the drawings. The aspects of the invention are capable of other embodiments and of being practiced or carried out in various ways. Also, it will be understood that the phraseology and terminology used herein is for the purpose of description and should not be regarded as limiting.

It will be apparent that modifications and variations are possible without departing from the scope of the invention defined in the appended claims. As various changes could be made in the above constructions and methods without departing from the scope of the invention, it is intended that all matter contained in the above description and shown in the accompanying drawings shall be interpreted as illustrative and not in a limiting sense.

In view of the above, it will be seen that several advantages of the aspects of the invention are achieved and other advantageous results attained.

The Abstract and Summary are provided to help the reader quickly ascertain the nature of the technical disclosure. They are submitted with the understanding that they will not be used to interpret or limit the scope or meaning of the claims. The Summary is provided to introduce a selection of concepts in simplified form that are further described in the Detailed Description. The Summary is not intended to identify key features or essential features of the claimed subject matter, nor is it intended to be used as an aid in determining the claimed subject matter.

Accordingly the invention also relates to a synchronization manager interface determining a first state of execution of an application task executing on a first controller at defined synchronization points and further determining a second state of execution of the application task executing on a second controller at the defined synchronization points. The synchronization manager interface, when executed, configures the first controller to transmit the first state from the first controller to the second controller via a communications channel established between the controllers for verifying a successful synchronization of the application task on the controllers based on a comparison of the first state with the second state.

## Claims

1. Method of synchronizing corresponding application tasks executing on an active controller and on a standby controller, the active controller and the standby controller each configurable for use in an electrical substation, the method comprising:
identifying an application task executing on the active controller and the standby controller capable of synchronization;
defining, for the application task, one or more synchronization points at which execution of the application task is to be synchronized;
synchronizing execution of the application task on the active controller and the standby controller at each of the synchronization points;
determining a first state of execution of the application task executing on the active controller at the synchronization points;
transmitting the first state from the active controller to the standby controller via a communications channel established therebetween; and
verifying a successful synchronization of the application task on the active controller and the standby controller based on a comparison of the first state with a second state of execution of the application task executing on the standby controller at the synchronization points.

2. Method as set forth in claim 1, further comprising executing an application programming interface for performing the determining, transmitting, and verifying.

3. Method as set forth in claim 1 or claim 2, wherein executing the application programming interface initiates automatically at start-up or periodically at an interval defined by the application task.

4. Method as set forth in any of the preceding claims, further comprising storing the first state in a transmit state table on the active controller and storing the second state in a receive state table on the standby controller, and wherein verifying the successful synchronization comprises comparing the transmit state table and the receive state table and determining the transmit state table and the receive state table match each other.

5. Method as set forth in in any of the preceding claims, further comprising performing a synchronization of the application task on the active controller and the standby controller when the comparison of the first state and the second state indicate a need for synchronization.

6. Method as set forth in claim 5, wherein performing the synchronization comprises transmitting one or more synchronization messages between the active controller and the standby controller via the communications channel.

7. Method as set forth in claim 5 or claim 6, further comprising sharing minimal data between the active controller and the standby controller in response to one or more synchronization messages, and/or
further comprising communicating a result of the synchronization, the result comprising at least one of Synch Success, Synch Failure, and Synch Timeout.

8. Method as set forth in any of claims 5 to 7, wherein the communication channel comprises a low bandwidth communication channel on which one or more synchronization messages are transmitted to achieve the synchronization and provide high availability capabilities.

9. Method as set forth in any of the preceding claims, wherein the active controller and the standby controller integrate a process domain and a power domain of the industrial operation.

10. System comprising:
a first controller executing an application task having one or more defined synchronization points at which execution of the application task is to be synchronized, the first controller further executing a synchronization manager interface for determining a first state of execution of the application task executing on the first controller at the synchronization points;
a second controller executing the application task having the same one or more defined synchronization points as the application task executing on the first controller, the second controller further executing the synchronization manager interface for determining a second state of execution of the application task executing on the second controller at the synchronization points;
wherein the synchronization manager interface, when executed, configures the first controller to transmit the first state from the first controller to the second controller via a communications channel established therebetween for verifying a successful synchronization of the application task on the first controller and the second controller based on a comparison of the first state with the second state.

11. System as set forth in claim 10, wherein the synchronization manager interface initiates automatically at start-up or periodically at an interval defined by the application task.

12. System as set forth in any of claims 10 to 11, wherein the first state is stored in a transmit state table on the first controller and the second state is stored in a receive state table on the second controller, and wherein the synchronization manager interface verifies a successful synchronization when the transmit state table matches the receive state table.

13. System as set forth in any of claims 10 to 12, wherein one or more synchronization messages transmitted between the first controller and the second controller via the communications channel perform a synchronization.

14. System as set forth in claim 13, wherein the synchronization manager interface communicates a result of the synchronization, the result comprising at least one of Synch Success, Synch Failure, and Synch Timeout.

15. System as set forth in any of claims 11 to 14, wherein the communication channel comprises a low bandwidth communication channel on which one or more synchronization messages are transmitted to achieve the synchronization and provide high availability capabilities.
